# EUROPÄISCHE PATENTSCHRIFT

(11) **EP 3 689 438 B1**
(45) Veröffentlichungstag und Bekanntmachung des Hinweises auf die Patenterteilung: **01.09.2021**
(21) Anmeldenummer: 20000066.9
(22) Anmeldetag: 07.12.2018
(51) Int. Cl.: B01D 46/00, B01D 41/04, B01D 46/04

(54) **REINIGUNGSVORRICHTUNG FÜR SCHLAUCHFILTER**
CLEANING DEVICE FOR BAG FILTER
DISPOSITIF DE NETTOYAGE POUR UN FILTRE À MANCHES

(43) Veröffentlichungstag der Anmeldung: 05.08.2020
(62) Teilanmeldung aus: 18000949.0
(73) Patentinhaber: Reining, Christian, 48167 Münster (DE)
(72) Erfinder: Reining, Christian, 48167 Münster (DE)
(74) Vertreter: Kayser, Christoph

(56) Entgegenhaltungen:
- EP-A1- 1 543 872
- WO-A1-2010/119899
- WO-A1-2016/006742
- DE-U1-202013 009 510
- JP-A- 2001 259 557

## Beschreibung

Die vorliegende Erfindung betrifft eine Reinigungsvorrichtung für Schlauchfilter, mit einem Reinigungskopf, der über einen Druckmittelschlauch mit einer Druckmittelquelle verbunden ist und eine Reinigungsbohrung aufweist, die um eine Hauptachse des Reinigungskopfes herum in Drehung versetzt werden kann und durch die Druckmittel austritt, und mit einer Steuereinrichtung zur Steuerung von Betriebsparametern, wobei der Reinigungskopf über eine Antriebswelle mit einer Antriebseinrichtung verbunden ist, welche die Reinigungsbohrung in Drehung versetzt, wobei die Steuereinrichtung auch die Antriebseinrichtung steuert.

Eine solche Reinigungsvorrichtung ist zum Beispiel aus WO 2010/119899 A1 oder WO 2016/006742 A1 bekannt. Die in dem vorgenannten Stand der Technik offenbarten Reinigungsvorrichtungen werden eingesetzt, um Schlauchfilter zu reinigen. Die Rohseite eines solchen mit den Reinigungsvorrichtungen des Standes der Technik zu reinigenden Schlauchfilters liegt außen und die Reinseite im Inneren des Schlauchfilters. Es strömt also die verunreinigte Luft von außen durch das Filtermaterial des Schlauchfilters nach innen und wird dort abgeführt. Beim Durchströmen des Schlauchfilters bleiben die Verunreinigungen der Luft in dem Filtermaterial hängen, so dass die Luft im Inneren des Schlauchfilters gereinigt ist. Mit der Zeit setzt sich die Außenseite solcher Schlauchfilter demnach mit den Verunreinigungen zu. Das bedeutet, dass sich das Filtergut überwiegend auf der Außenseite ablagert und zunehmend die Durchlässigkeit des Filtermaterials vermindert.

Durch das Zusetzen von Schlauchfiltern über die Betriebszeit verringert sich deren Filterleistung. Es ist daher in vorbestimmten zeitlichen Abständen erforderlich, solche Schlauchfilter zu reinigen, um stets eine gute Filterleistung sicherzustellen.

Zu diesem Zweck wird in vorbestimmten zeitlichen Abständen entweder im laufenden Betrieb der Filteranlage oder aber während eines Stillstands ein Reinigungskopf in das Innere des Schlauchfilters, also auf der Reinseite, eingeführt. Der Reinigungskopf ist über einen Druckmittelschlauch mit einer Druckmittelquelle verbunden, die sich irgendwo außerhalb befindet. Die Schlauchfilter hängen mit einem offenen Ende in einer Öffnung eines Filterbodens, auf dem zum Beispiel die Druckmittelquelle platziert werden kann. Die Druckmittelquelle weist eine Steuereinrichtung auf, mit deren Hilfe der Druck des Druckmittels einstellbar ist. Der Reinigungskopf weist wiederum wenigstens eine radiale Bohrung auf, aus der das Druckmittel in radialer Richtung aus dem Reinigungskopf austreten kann und gegebenenfalls auf die Innenseite des Schlauchfilters auftrifft. Bei nicht-rotierenden Reinigungsköpfen bildet die Reinigungsbohrung zum Beispiel eine Ringdüse, so dass ein umfänglicher Reinigungsstrahl austreten kann, der sich bei einer Bewegung des Reinigungskopfes entlang der Längsachse des Schlauchfilters dazu führt, dass sich das Filtermaterial des Schlauchfilters in Bewegungsrichtung wellenartig nach außen wölbt. Dadurch fällt das Filtergut von der Außenseite des Schlauchfilters ab.

In dem oben angegebenen Stand der Technik weist der Reinigungskopf wenigstens eine tangentiale Bohrung auf, der nicht der Reinigung, sondern dem Antrieb des Reinigungskopfes bzw. eines Bauteils mit der Reinigungsbohrung dient. Durch die wenigstens eine tangentiale Bohrung tritt ebenfalls Druckmittel tangential aus und versetzt zumindest die Reinigungsbohrung in Drehung. Während eines Reinigungsbetriebs führt die Drehung dazu, dass sich der tangentiale Reinigungsstrahl schraubenförmig entlang der Innenseite des Schlauchfilters bewegt, wenn der Reibungskopf entlang der Längsachse des Schlauchfilters hin und her bewegt wird. Die Ganghöhe der dadurch beschriebenen Schraubenlinie ist abhängig von der Geschwindigkeit, mit welcher der Reinigungskopf entlang der Längsachse des Schlauchfilters bewegt wird. Rotierende Reinigungssysteme erbringen eine bessere Reinigungsleistung gegenüber nicht-rotierenden Reinigungssystemen. Neben der druckgesteuerten Drehung ist auch ein motorischer Antrieb vorgesehen.

Der Nachteil der rotierenden Reinigungsvorrichtungen des oben genannten Standes der Technik liegt darin, dass einerseits die Steuerung des Druckmittels und die Steuerung der Drehbewegung der Reinigungsbohrung unmittelbar abhängig voneinander sind und andererseits der motorische Antrieb stromaufwärts des Reinigungskopfes in dessen unmittelbarer Nähe angeordnet ist. Bei einem geringen Druck des Druckmittels verringert sich die Drehgeschwindigkeit der Reinigungsbohrung und bei einem höheren Druck erhöht sich die Drehbewegung der Reinigungsbohrung entsprechend. Ein zusätzlicher motorischer Antrieb muss diese Schwankungen ausgleichen.

Diese Abhängigkeit stellt sich als Nachteil heraus, wenn eine Reinigungsvorrichtung für Schlauchfilter für einen breiten Anwendungsbereich genutzt werden soll. Je nach Art der Verunreinigung kann es in einem Fall günstig sein, mit höherem Druck und geringerer Drehbewegung zu arbeiten, während es in einem anderen Fall günstig sein kann, mit geringem Druck und hoher Drehbewegung zu arbeiten.

Die Aufgabe der vorliegenden Erfindung ist daher, eine Reinigungsvorrichtung der eingangs genannten Art derart weiterzubilden, dass diese in einem großen Anwendungsbereich stets optimal gesteuert werden kann.

Die Aufgabe wird erfindungsgemäß dadurch gelöst, dass die Antriebswelle flexibel ausgebildet ist.

Eine flexible Antriebswelle ermöglicht, die Antriebseinrichtung in räumlicher Entfernung vom Reinigungskopf anzuordnen und die Antriebswelle im Druckmittelschlauch zu führen. Die flexible Antriebswelle kann sich den Bewegungen des Druckmittelschlauchs anpassen.

Ein weiterer Vorteil der vorliegenden Erfindung ist, dass der Druckmittelchlauch an einem dem Reinigungskopf entgegengesetzten Ende an ein Druckrohr gekuppelt ist. Die Anordnung eines Druckrohrs zwischen dem Druckmittelschlauch und der Druckmittelquelle ermöglicht, in einfacher Weise, mechanische Bauteile und Steuerelemente mit dem Druckmittelschlauch zu verbinden.

Ein weiterer Vorteil der vorliegenden Erfindung ist, dass das Druckrohr ein Lager für die Antriebswelle aufweist. Die Antriebswelle kann somit aus der Antriebseinrichtung über das Lager in das Druckrohr und somit in den Druckschlauch eingeführt werden.

Ein weiterer Vorteil der vorliegenden Erfindung ist es, dass der Reinigungskopf einen Rotor aufweist, in dem die Reinigungsbohrung ausgebildet ist. Durch diese Maßnahme ist sichergestellt, dass sich nicht der gesamte Reinigungskopf drehen muss, sondern nur ein Bauteil desselben. Es ist daher möglich, den Rotor nach außen abzudecken und dadurch zu verhindern, dass drehende Teile mit einem sich zwischen dem Reinigungskopf und dem Filtermaterial angeordneten Stützkopf kollidieren.

Weitere Vorteile der vorliegenden Erfindung ergeben sich aus den weiteren Merkmalen der weiteren Unteransprüche.

Ausführungsformen der vorliegenden Erfindung werden im Folgenden näher dargestellt. Es zeigen:
Fig. 1 eine schematische Darstellung einer außerhalb eines Schlauchfilters positionierten Steuerkiste als Teil der erfindungsgemäßen;
Fig. 2 eine schematische Darstellung eines Reinigungskopfes und eines daran ansetzenden Druckmittelschlauchs als Teil der erfindungsgemäßen Reinigungsvorrichtung aus Fig.1.

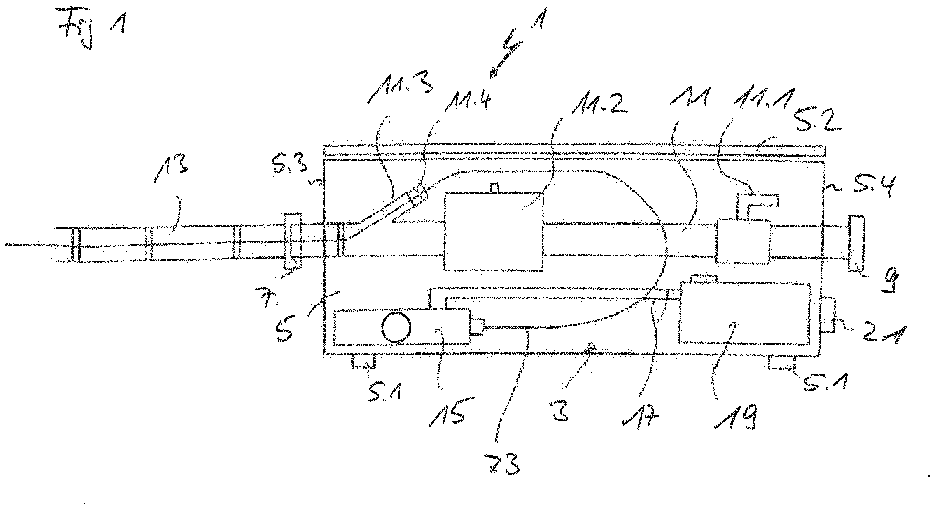

In Fig. 1 ist schematisch ein Teil einer Reinigungsvorrichtung 1 gemäß vorliegender Erfindung dargestellt. Das Teil wird als Steuerkiste 3 bezeichnet und ist außerhalb eines zu reinigenden Filterschlauchs (nicht dargestellt) positioniert. Zu diesem Zweck weist die Steuerkiste 3 ein Gehäuse 5 auf, das hier nur schematisch als rechteckige Linie dargestellt ist. An dem Gehäuse 5 sind bodenseitig Füße 5.1 und deckenseitig ein Deckel 5.2 vorgesehen. An einer ersten Seitenwand 5.3 weist das Gehause 5 einen ersten Kupplungsanschluss 7 auf. An einer zweiten Seitenwand 5.4 weist das Gehäuse 5 einen zweiten Kupplungsanschluss 9 auf. Im Inneren des Gehäuses 5 befindet sich ein Druckrohr 11, das sich von dem Kupplungsanschluss 7 zum zweiten Kupplungsanschluss 9 erstreckt und in der vorliegenden ersten Ausführungsform im Wesentlichen krümmungsfrei verläuft. Der zweite Kupplungsanschluss 9 dient als Anschluss an eine Druckmittelquelle (nicht dargestellt) und der erste Kupplungsanschluss 7 dient zum Anschluss eines Druckmittelschlauchs 13. Als Druckmittelquelle kann für die vorliegende Ausführungsform zum Beispiel ein Kompressor dienen. In diesem Fall ist das Druckmittel Umgebungsluft. In anderen Ausführungsformen können aber auch andere zur Reinigung geeignete Gase, z.B. Inertgase, verwendet werden.

An dem Druckmittelrohr 11 ist in der Nähe des zweiten Kupplungsanschlusses 9 ein Absperrhahn 11.1 angeordnet. Mit diesem Absperrhahn 11.1 kann ein von der Druckmittelquelle über den zweiten Druckmittelanschluss 9 strömendes Druckmittel abgesperrt werden. Stromabwärts in Richtung des ersten Kupplungsanschlusses 7 ist an dem Druckmittelrohr 11 ein Steuerventil 11.2 angeordnet, das öffnen und schließen kann. Zwischen dem Steuerventil 11.2 und dem ersten Kupplungsanschluss 7 ist ein Rohransatz 11.3 vorgesehen, der an einem freien Ende ein Dichtungselement 11.4 aufweist, das in der vorliegenden Ausführungsform ein Simmerring sein kann.

Unterhalb des Druckmittelrohrs 11 ist in der Steuerkiste 3 eine Antriebseinrichtung 15 angeordnet. Bei der Antriebseinrichtung 15 handelt es sich in der vorliegenden Ausführungsform um einen Elektromotor. Der Elektromotor ist über eine elektrische Verbindung 17 mit einer Steuereinrichtung 19 verbunden. Die Steuereinrichtung 19 ist eine Steuerbox mit Display (nicht dargestellt), mit der Betriebsparameter der Antriebseinrichtung 15, zum Beispiel Drehzahlen, eingestellt werden können. Die Steuereinrichtung 19 kann auch mit dem Steuerventil 11.2 verbunden sein, um auch die Betriebsparameter des Druckmittels einstellen zu können. In anderen Ausführungsformen können auch unabhängige Steuereinrichtungen für Druckmittel und Antrieb vorgesehen sein. Die Steuereinrichtung 19 ist wiederum über einen Spannungsversorgungsanschluss 21 mit einer Spannungsquelle, zum Beispiel Netzspannung, verbunden.

Die Antriebseinrichtung 15 treibt eine Antriebswelle 23 an, die flexibel ist und über eine Dichteinrichtung 11.4 und den Rohransatz 11.3 in den Druckmittelschlauch 13 eingeführt ist Der Rohransatz 11.3 bzw. die Dichtungseinrichtung 11.4 dienen als Lager für die flexible Antriebswelle 23.

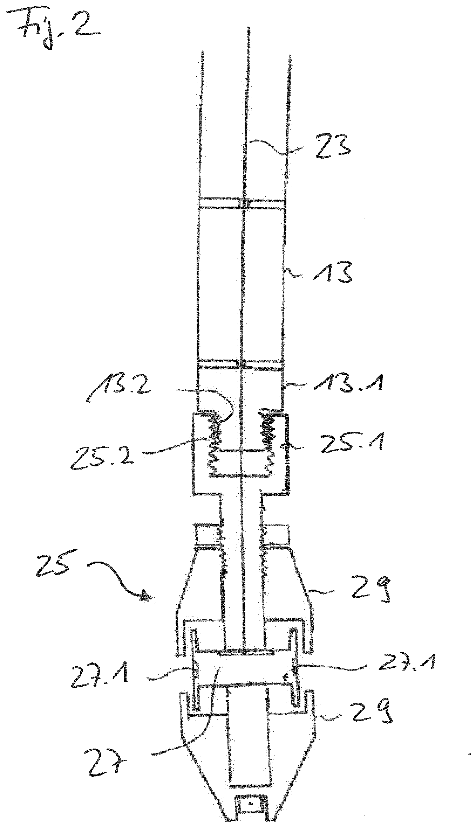

Der Drackmittelschiauch 13 ist ein flexibler Schlauch, der üblicherweise für die Leitung von Druckmittel, z.B. Druckluft, verwendet wird. Der Druckmittelscblauch 13 ist an einem entgegengesetzten Ende 13.1 mit einem Reinigungskopf 25 verbunden. Dies ist in Fig. 2 schematisch dargestellt. Die Länge des Druckmittelschlauchs 13 ist abhängig von der Länge eines zu reinigenden Schlauchfilters.

Das Ende 13.1 des Druckmittelschlauchs 13 weist ein Außengewinde 13.2 auf, das mit einem Innengewinde 25.2 eines Deckels 25.1 kämmt. Auf diese Weise kann der Reinigungskopf 25 auf das Ende 13.1 des Druckmittelschlauchs 13 geschraubt werden. Die Schraubverbindung ist fest aber lösbar und gut geeignet für eine betriebssichere Verbindung.

In dem Reinigungskopf 25 ist ein Rotor 27 ausgebildet, der wenigstens eine Reinigungsbohrung 27.1 aufweist, die im Wesentlichen radial ausgerichtet ist und einen Reinigungsstrahl des Druckmittels in Richtung einer Innenwand des Schlauchfilters lenkt. Die Antriebswelle 23 ist mit dem Rotor 27 verbunden und treibt den Rotor 27 und somit die Reinigungsbohrung 27.1 zu einer Drehbewegung an, wenn die Antriebseinrichtung 15 eingeschaltet ist. Der Rotor 27 ist nach außen von einem Mantel 29 des Reinigungskopfes 25 weitestgehend abgedeckt, so dass die drehenden Bauteile des Reinigungskopfes 25 nicht freiliegen. Dadurch wird ein Berührungskontakt zwischen Rotor 27 und einem im Schlauchfilter zum Aufspannen des Schlauchfilters angeordneten Stützkorb verhindert. In der vorliegenden Ausführungsform ist im Mantel 29 eine Ausnehmung 30 ausgebildet, die mit der Reinigungsbohrung 27.1 fluchtet, wenn beide gleichgerichtet sind. Dadurch können bei kontinuierlichem Druckmittelstrom Impulse erzeugt werden, welche die Reinigungswirkung noch verbessern.

### Bezugszeichenliste

- 1: Reinigungsvorrichtung
- 3: Steuerkiste
- 5: Gehäuse
- 5.1: Füße
- 5.2: Deckel
- 5.3: erste Seitenwand
- 5.4: zweite Seitenwand
- 7: erster Kupplungsanschluss
- 9: zweiter Kupplungsanschluss
- 11: Druckmittelrohr
- 11.1: Absperrhahn
- 11.2: Steuerventil
- 11.3: Rohransatz
- 11.4: Dichtungselement
- 13: Druckmittelschlauch
- 13.1: Ende des Druckmittelschlauchs
- 13.2: Außengewinde
- 15: Antriebseinrichtung
- 17: elektrische Verbindung
- 19: Steuereinrichtung
- 21: Spannungsversorgungsanschluss
- 23: flexible Antriebswelle
- 25: Reinigungskopf
- 25.1: Deckel
- 25.2: Innengewinde
- 27: Rotor
- 27.1: Reinigungsbohrung
- 29: Mantel
- 30: Ausnehmung

## Patentansprüche

1. Reinigungsvorrichtung für Schlauchfilter, mit einem Reinigungskopf (25), der über einen Druckmittelschlauch (13) mit einer Druckmittelquelle verbunden ist und eine Reinigungsbohrung (27.1) aufweist, die um eine Hauptachse des Reinigungskopfes (25) herum in Drehung versetzt werden kann und durch die Druckmittel austritt, und mit einer Steuereinrichtung (19) zur Steuerung von Betriebsparametern, wobei der Reinigungskopf (25) über eine Antriebswelle (23) mit einer Antriebseinrichtung (15) verbunden ist, welche die Reinigungsbohrung (27.1) in Drehung versetzt, wobei die Steuereinrichtung (19) auch die Antriebseinrichtung (15) steuert, **dadurch gekennzeichnet,**
**dass** die Antriebswelle (23) flexibel ausgebildet ist.

2. Reinigungsvorrichtung nach Anspruch 1,
**dadurch gekennzeichnet, dass** der Druckmittelschlauch (13) an einem dem Reinigungskopf (25) entgegengesetzten Ende an ein Druckrohr (11) gekuppelt ist.

3. Reinigungsvorrichtung nach Anspruch 2,
**dadurch gekennzeichnet,**
**dass** das Druckrohr (11) ein Lager für die Antriebswelle (23) aufweist.

4. Reinigungsvorrichtung nach Anspruch 2 oder 3,
**dadurch gekennzeichnet,**
**dass** das Druckrohr (11), die Antriebseinrichtung (15) und die Steuereinrichtung (19) in einem Gehäuse (5) angeordnet sind.

5. Reinigungsvorrichtung nach Anspruch 4,
**dadurch gekennzeichnet,**
**dass** die das Gehäuse (5) einen ersten Kupplungsanschluss (7) für Kupplung mit dem Druckmittelschlauch (13) und einen zweiten Kupplungsanschluss (9) für eine Kupplung mit der Druckmittelquelle aufweist.

6. Reinigungsvorrichtung nach Anspruch 1,
**dadurch gekennzeichnet,**
**dass** der Reinigungskopf (25) einen Rotor (27) aufweist, in dem die Reinigungsbohrung (27.1) ausgebildet ist.

7. Reinigungsvorrichtung nach einem der vorstehenden Ansprüche,
**dadurch gekennzeichnet,**
**dass** die Steuereinrichtung (19) mit einer Spannungsversorgung verbunden ist.

8. Reinigungsvorrichtung nach Anspruch 7,
**dadurch gekennzeichnet,**
**dass** das Gehäuse (5) einen elektrischen Anschluss (17) zur Spanungsversorgung der Steuereinrichtung (19) aufweist.

9. Reinigungsvorrichtung nach einem der Ansprüche 2 bis 8,
**dadurch gekennzeichnet,**
**dass** das Druckrohr (11) ein Steuerventil (11.2) aufweist.

## Claims

1. A cleaning device for bag filters, comprising a cleaning head (25) connected to a pressure medium source by means of a pressure medium hose (13) and comprising a cleaning hole (27.1) which can be set in rotation about a main axis of the cleaning head (25) and through which pressure medium emerges, and comprising a control device (19) for controlling operating parameters, the cleaning head (25) being connected by means of a drive shaft (23) to a drive device (15) which sets the cleaning hole (27.1) in rotation, the control device (19) also controlling the drive device (15), **characterized in that** the drive shaft (23) is flexible in form.

2. The cleaning device according to claim 1, **characterized in that**
the pressure medium hose (13) is coupled to a pressure pipe (11) at an end opposite the cleaning head (25).

3. The cleaning device according to claim 2, **characterized in that**
the pressure pipe (11) comprises a bearing for the drive shaft (23).

4. The cleaning device according to claim 2 or 3, **characterized in that**
the pressure pipe (11), the drive device (15) and the control device (19) are arranged in a housing (5).

5. The cleaning device according to claim 4, **characterized in that**
the housing (5) comprises a first coupling connection (7) for coupling with the pressure medium hose (13) and a second coupling connection (9) for coupling with the pressure medium source.

6. The cleaning device according to claim 1, **characterized in that**
the cleaning head (25) comprises a rotor (27) in which the cleaning hole (27.1) is formed.

7. The cleaning device according to any one of the preceding claims,
**characterized in that**
the control device (19) is connected to a voltage supply.

8. The cleaning device according to claim 7, **characterized in that**
the housing (5) comprises an electrical connection (17) for supplying voltage to the control device (19).

9. The cleaning device according to any one of claims 2 to 8,
**characterized in that**
the pressure pipe (11) comprises a control valve (11.2).

## Revendications

1. Dispositif de nettoyage pour filtre tubulaire, comprenant une tête de nettoyage (25) qui est connectée par un tuyau de fluide sous pression (13) à une source de fluide sous pression et présente un trou de nettoyage (27.1) qui peut être mis en rotation autour d'un axe principal de la tête de nettoyage (25) et à travers lequel du fluide sous pression sort, et un dispositif de commande (19) pour la commande de paramètres de fonctionnement, la tête de nettoyage (25) étant connectée par un arbre moteur (23) à un dispositif d'entraînement (15) qui met le trou de nettoyage (27.1) en rotation, le dispositif de commande (19) commandant aussi le dispositif d'entraînement (15), **caractérisé en ce que**
l'arbre moteur (23) a une conformation souple.

2. Dispositif de nettoyage selon la revendication 1, **caractérisé en ce que**
le tuyau de fluide sous pression (13) est couplé par une extrémité opposée à la tête de nettoyage (25) à un tube sous pression (11).

3. Dispositif de nettoyage selon la revendication 2, **caractérisé en ce que**
le tube sous pression (11) présente un palier pour l'arbre moteur (23).

4. Dispositif de nettoyage selon la revendication 2 ou 3, **caractérisé en ce que**
le tube sous pression (11), le dispositif d'entraînement (15) et le dispositif de commande (19) sont disposés dans un boîtier (5).

5. Dispositif de nettoyage selon la revendication 4, **caractérisé en ce que**
le boîtier (5) présente un premier raccord de couplage (7) destiné à être couplé au tuyau de fluide sous pression (13) et un second raccord de couplage (9) destiné à prendre un à être couplé à la source de fluide sous pression.

6. Dispositif de nettoyage selon la revendication 1, **caractérisé en ce que**
la tête de nettoyage (25) présente un rotor (27) dans lequel le trou de nettoyage (27.1) est pratiqué.

7. Dispositif de nettoyage selon une des revendications précédentes,
**caractérisé en ce que**
le dispositif de commande (19) est connecté à une alimentation en tension.

8. Dispositif de nettoyage selon la revendication 7, **caractérisé en ce que**
le boîtier (5) présente un raccordement électrique (17) pour l'alimentation en tension du dispositif de commande (19).

9. Dispositif de nettoyage selon une des revendications 2 à 8,
**caractérisé en ce que**
le tube sous pression (11) présente une soupape de commande (11.2).
